# EUROPEAN PATENT APPLICATION

(11) **EP 1 178 428 A1**
(43) Date of publication of application: **06.02.2002**
(21) Application number: 00913037.8
(22) Date of filing: 31.03.2000
(51) Int. Cl.: G06K 1/12, G06K 7/12, G06K 19/06

(54) **DOT CODE AND TWO-DIMENSIONAL CODE**

(30) Priority: 01.04.1999 JP 9461799; 01.04.1999 JP 9461899; 01.04.1999 JP 9461999
(71) Applicant: Omron Corporation, Kyoto-shi, Kyoto 600-8530 (JP)
(72) Inventor: CHUJO, Hideki Omron Corp. 801, Minamifudoudou-cho, Kyoto-shi Kyoto 600-8530 (JP); NISHIO, Goki Omron Corp. 801, Minamifudoudou-cho, Kyoto-shi Kyoto 600-8530 (JP); MATSUMURA, Mitsuru Om.Corp. 801 Minamifudoudou-cho, Kyoto-shi Kyoto 600-8530 (JP); KAKIUSHI, Takashi Om. Corp. 801 Minamifudoudou-cho, Kyoto-shi Kyoto 600-8530 (JP)
(74) Representative: Kilian, Helmut, Dr.
(86) International application number: JP0002093
(87) International publication number: WO0060524

(57) **Abstract**

A two-dimensional code is constituted of dots and the dots are printed with pitch P which is approximately twice as large as pitch P0 corresponding to the highest resolution of a printing unit for printing the dots. The two-dimensional code can thus be provided which is printed to occupy a small area and can accurately be read.

## Description

### Technical Field

The present invention relates to dot codes and two-dimensional codes. In particular, the invention relates to dot codes and two-dimensional codes printed to occupy a small area that can accurately be read.

### Background Art

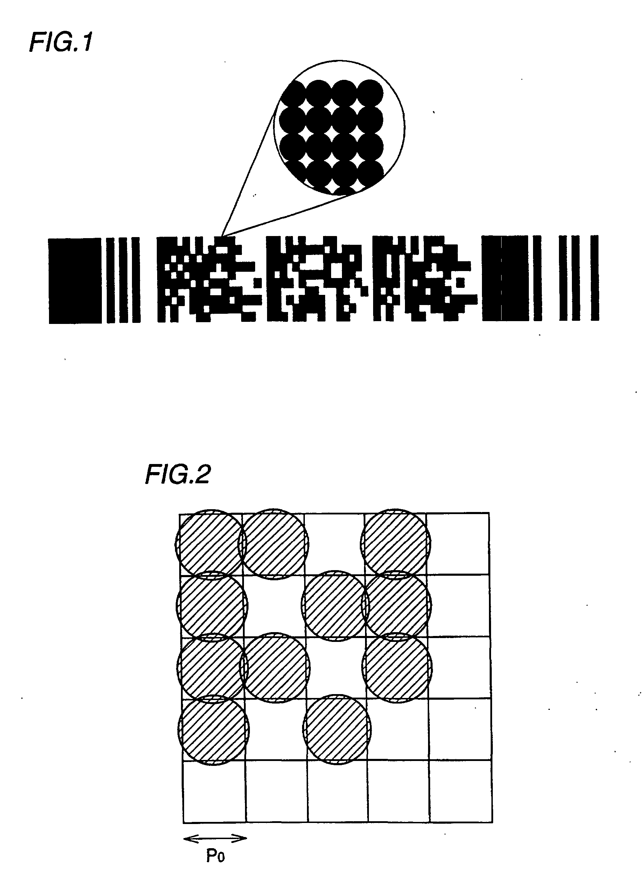

Fig. 1 shows one example of conventional two-dimensional codes. As shown in Fig. 1, this two-dimensional code is constituted of a collection of blocks each having a predetermined size. A predetermined code is represented by presence/absence of blocks at respective positions. The two-dimensional code can be printed on any printed matter or the like to allocate various types of information to the printed matter.

However, the two-dimensional code has a problem that the printed code occupies a large area since the blocks mentioned above each consist of a plurality of pixels.

It is possible for example to constitute one block by one dot like that used for printing one block by a printing apparatus (printer). In this way, as shown in Fig. 2 for example, data can be represented by presence/absence of pixels on the basis of pitch P0 corresponding to the highest resolution of the printer.

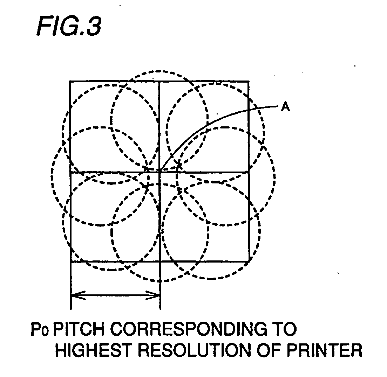

However, when the printer is used to print one pixel (dot) at a predetermined position, position A for example as shown in Fig. 3, dots could actually be printed at various positions as indicated by broken lines.

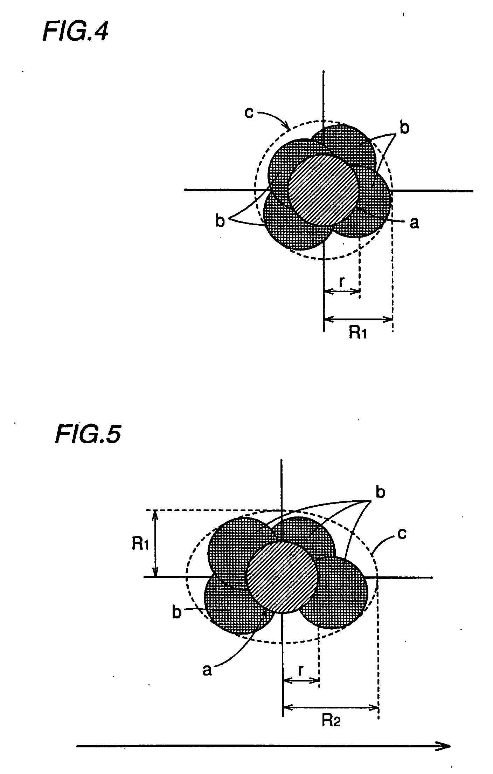

Specifically, as shown in Fig. 4 for example, when one pixel (dot) is originally intended to be printed at a predetermined position a (indicated by a white circle), dots could actually be printed at various positions b (indicated by hatching). As a result, perimeter C (indicated by dotted line) of the region of the printed dots deviated from the originally intended center has radius R1 that is larger than radius r, extended from the originally intended center, where the perimeter of the dot should be located.

Moreover, as shown in Fig. 5, when deviation in a transport direction is considered, the transport direction being the one in which a medium (sheet of paper) with dots printed thereon by the printer is transported (this transport direction is indicated by the arrow in Fig. 5), perimeter C of printed dots deviated from the originally intended center has radius R1 in the main scanning direction (downward direction in Fig. 5) equal to that shown in Fig. 4 while radius R2 in the sub scanning direction (rightward direction in Fig. 5) is greater than radius R1.

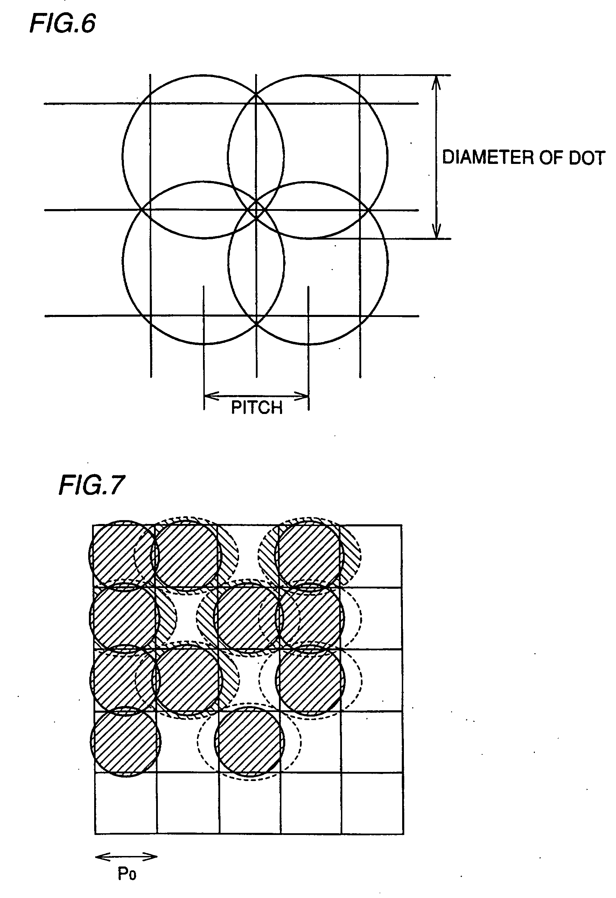

In addition, as shown in Fig. 6, each dot of the printer has its diameter set equal to or somewhat greater than pitch P0 corresponding to the highest resolution of the printer. Then, as shown in Fig. 7, when no dot is printed in a central region and dots are printed in respective regions horizontally and vertically adjacent to the central region, the printed dots protrude from respective adjacent regions. Accordingly, when a resultant two-dimensional code is read, the code could be read erroneously such that a dot is present in the central region. This is more clearly seen when the deviation of dots as described with reference to Fig. 4 or 5 is considered.

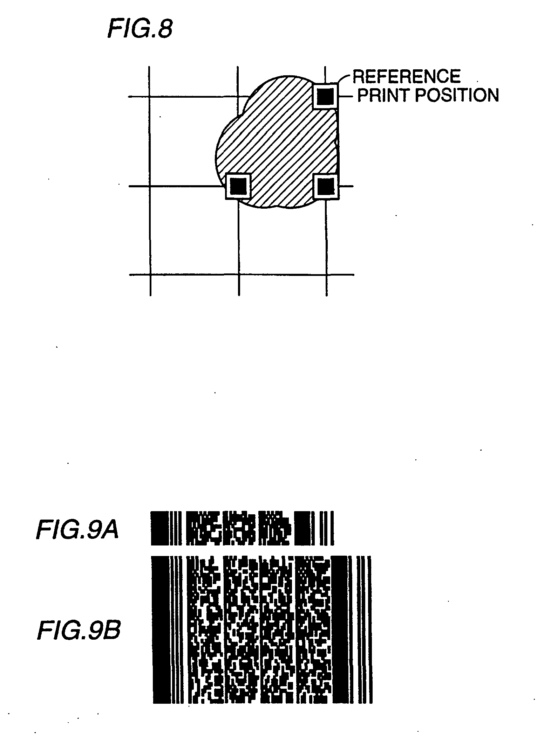

Fig. 8 shows one example of the case as discussed above. Specifically, according to the example in Fig. 8, pixels represented by black circles in Fig. 8 are printed respectively at reference print positions represented by squares in Fig 8. Actually, however, printed three pixels are deviated from respective reference positions and thus seem to be one pixel.

Accordingly, a two-dimensional code usually has an error correction code added thereto. A problem then arises that the additional error correction code makes the print area larger as shown in Fig. 9B than that where no error correction code is added as shown in Fig. 9A.

Pattern codes as described above are generally printed in monochrome. A problem here is that only one type of information can be allocated to a pattern code.

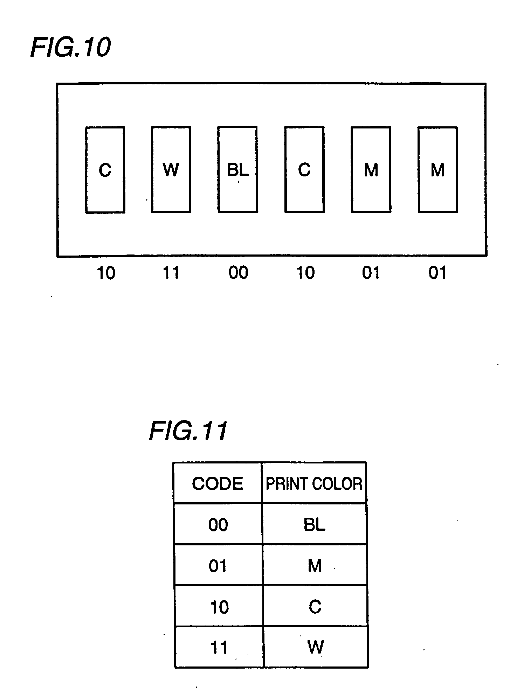

A color code as shown in Fig. 10 for example is accordingly proposed that is represented by a pattern with a plurality of color elements such as cyan (C), white (W), black (BL) or magenta (M). As shown in Fig. 11 for example, this color code has black (BL), magenta (M), cyan (C) or white (W) to which code "00", "01", "10" or "11" is allocated. Only one code "101100100101" is thus allocated to the pattern "C", "W", "BL", "C", "M", "M" for example shown in Fig. 10.

A problem of this conventional pattern code is that a secret code cannot be embedded in an original code for example.

The present invention has been made in consideration of the situation as discussed above. One object of the invention is to provide a code printed to occupy a small area that can correctly be read.

Another object of the invention is to provide a code that can represent information of multiple types.

Still another object of the invention is to provide a printing apparatus capable of supplying a pattern code to which a plurality of codes are allocated.

A further object of the invention is to provide a reading apparatus capable of reading a plurality of codes from one pattern code, the codes being allocated to the pattern code.

### Disclosure of the Invention

A dot code according to the present invention includes dots arranged on the basis of a pitch approximately twice as large as a diameter of a dot.

The dots are arranged with a pitch twice as large as the diameter of a dot. Then, the dot code can be provided that is printed to occupy a relatively small area and can be read accurately.

According to another aspect of the invention, a dot code includes dots arranged with a minimum pitch in a region on a reference line and arranged with a pitch longer than the minimum pitch in a remaining region except for the region on the reference line.

The dot code thus includes dots arranged with the minimum pitch in the region on the reference line and arranged with the pitch longer than the minimum pitch in a residual region except for the region on the reference line. Then, the dots arranged in the remaining region except for the region on the reference line can correctly be read.

According to still another aspect of the invention, a dot code includes dots arranged at respective positions in a region on a reference line and arranged at respective positions corresponding to data in a remaining region except for the region on said reference line, and a region where none of said dots is arranged is formed between the reference line and the remaining region.

In this way, the region without dot arranged therein is formed between the reference line and the remaining region. It is thus possible to accurately detect the reference line region and accurately read dots arranged in the remaining region.

According to a further aspect of the invention, a dot code includes dots colored in colors corresponding to respective positions where the dots are arranged.

As the dots are colored in respective colors corresponding to the positions where the dots are arranged, erroneous reading of the dots can be prevented.

According to a further aspect of the invention, a dot code includes a header section and a data section, and dots have a pitch in the header section set at a greater value than that of a pitch in the data section.

As the dot pitch for the header section is set at a value greater than that of the dot pitch for the data section, it is possible to prevent any important information included in the header section from being erroneously detected.

According to a further aspect of the invention, a two-dimensional code has an error correction code for a header section with a higher correction capability than that of an error correction code for a data section.

As the error correction code for the header section has a higher correction capability than that of the error correction code for the data section, the total amount of the two-dimensional code can be reduced while any error in important information included in the header section can be corrected accurately.

According to a further aspect of the invention, a dot code includes dots arranged in each column with a pitch approximately twice as large as a diameter of a dot, the dots are arranged in a first column and arranged in a second column adjacent to and apart from the first column by the pitch approximately twice as large as the diameter of a dot, the dots arranged in the second column each being displaced in the direction of the column by almost the diameter of a dot from a position of the dot arranged in the first column.

The dots are arranged with the pitch approximately twice as large as the diameter of a dot in each column, the dots are arranged in a first column and in the adjacent second column apart from the first column by the pitch approximately twice as large as the dot diameter, and the dots arranged in the second column are each displaced in the direction of the column by almost the diameter of a dot from the position of the dot arranged in the first column. Accordingly, the dot code can be implemented that is printed to occupy a relatively small area and can accurately be read.

According to a further aspect of the invention, a pattern code is constituted of a plurality of elements in predetermined colors, and the colors of the elements are determined to allow the pattern code read with light in a first color to provide a first code and allow the pattern code read with light in a second color to provide a second code.

The elements of the pattern code has colors determined such that the first code is obtained when the pattern code is read with a first color and the second code is obtained when the pattern code is read with the second color. Then, one pattern code can be implemented to which a plurality of codes are allocated.

According to a further aspect of the invention, a printing apparatus for printing a pattern code constituted of a plurality of elements in predetermined colors on a medium includes capture means for capturing a plurality of data, determination means for determining the predetermined colors by combining the plurality of data captured by the capture means, and print means for printing the pattern code of the elements in the colors determined by the determination means on the medium.

The printing apparatus prints the pattern code with the elements in colors determined by combining a plurality of captured data. Then, the printing apparatus can be provided capable of supplying one pattern code to which a plurality of codes are allocated.

According to a further aspect of the invention, a reading apparatus for reading a pattern code constituted of a plurality of elements in predetermined colors from a medium on which the pattern code is printed includes generation means for generating light in a plurality of colors, control means for controlling the generation means to generate light in a predetermined color among the plurality of colors, and reading means for reading a first code from the pattern code on the medium when light in a first color is generated by the generation means and reading a second code from the pattern code on the medium when light in a second color is generated by the generation means.

The reading apparatus reads the first code with light in the first color and reads the second code with light in the second color. Then, the reading apparatus can be provided capable of reading a plurality of codes from one pattern code to which the codes are allocated.

### Brief Description of the Drawings

Fig. 1 illustrates a conventional two-dimensional code.
Fig. 2 illustrates a conventional dot code.
Fig. 3 illustrates deviation of printed dots.
Figs. 4 and 5 illustrate deviation of printed dots.
Fig. 6 illustrates dot diameter and pitch.
Fig. 7 illustrates a deviated state of printed dots.
Fig. 8 illustrates a deviated state of printed dots.
Figs. 9A and 9B illustrate a two-dimensional code to which an error correction code is added.
Fig. 10 shows an example of conventional color barcodes.
Fig. 11 illustrates a relation between colors and codes.
Fig. 12 shows an example of a structure of a printing apparatus according to a first embodiment of the present invention.
Fig. 13 illustrates an example of printed cards.
Fig. 14 is a block diagram showing an example of a structure of a reading apparatus for a card to which the first embodiment of the invention is applied.
Fig. 15 shows a state of printed dots.
Fig. 16 illustrates reading of dots.
Fig. 17 shows a resultant reading of dots shown in Fig 16.
Fig. 18 shows a result obtained by recognition of the reading shown in Fig. 17.
Fig. 19 illustrates a reference row and a reference column.
Fig. 20 shows a resultant reading of dots in Fig. 19.
Fig. 21 shows a result obtained by recognition of the reading in Fig. 20.
Fig. 22 shows another reference row and column as an example.
Fig. 23 shows a resultant reading of dots in Fig. 24.
Fig. 24 shows a histogram obtained by processing the reading in Fig. 23.
Fig. 25 illustrates a resultant recognition of the reading shown in Fig. 23.
Figs. 26-29 show further exemplar dot codes.
Figs. 30A to 30C show error correction codes for header and data sections.
Fig. 31 shows a state of printed dots according to a second embodiment.
Figs. 32 and 33 each show a state of printed dots.
Fig. 34 is a block diagram showing an example of a structure of a printing apparatus according to a third embodiment of the present invention.
Fig. 35 illustrates a relation between colors and codes.
Fig. 36 is a block diagram showing an example of a structure of a reading apparatus according to the third embodiment.
Figs. 37 and 38 show resultant readings of a color pattern by means of radiation in predetermined colors.
Fig. 39 illustrates a relation between colors and codes.

### Best Modes for Carrying Out the Invention

### (1) First Embodiment

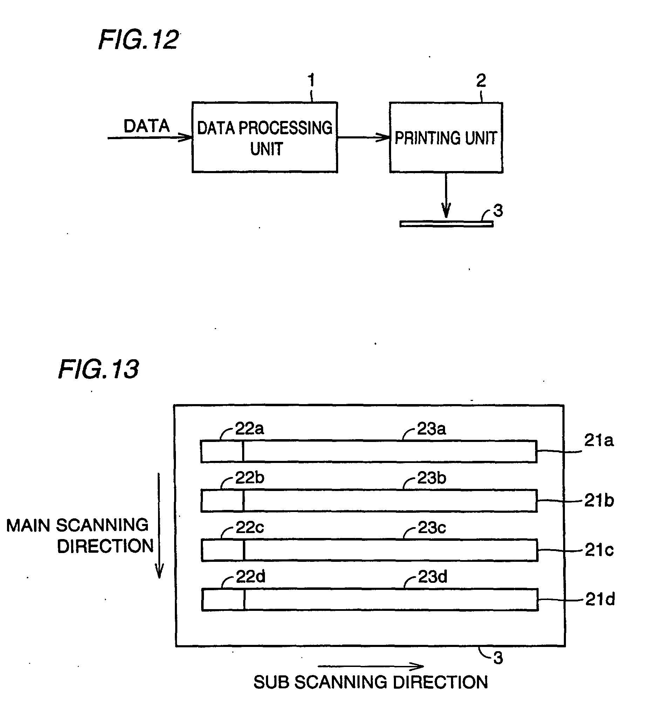

Referring to Fig. 12, a printing apparatus according to a first embodiment of the present invention includes a data processing unit 1 and a printing unit 2. Data (e.g. audio data) corresponding to a two-dimensional code to be printed on a card 3 is input to data processing unit 1 of the printing apparatus. Data processing unit 1 then converts the input data into a pattern of the two-dimensional code and outputs the resultant pattern to printing unit 2. Printing unit 2 accordingly makes a print of (prints) the print pattern supplied from data processing unit 1 on card 3 formed of paper, plastic or the like.

Fig. 13 shows an exemplary card 3 on which two-dimensional codes are printed in the above-described manner. Here, four two-dimensional codes 21a-21d are printed on this card (these two-dimensional codes 21a-21d are simply referred to as two-dimensional code 21 if distinctions among these codes are unnecessary, this reference is herein applied to other discussions). Two-dimensional code 21a is divided into a header section 22a and a data section 23a. On header section 22a, type, version and further information concerning data recorded on data section 23a are recorded. Audio data in this example is recorded on data section 23a. Similarly, two-dimensional codes 21b-21d have data recorded on header and data sections.

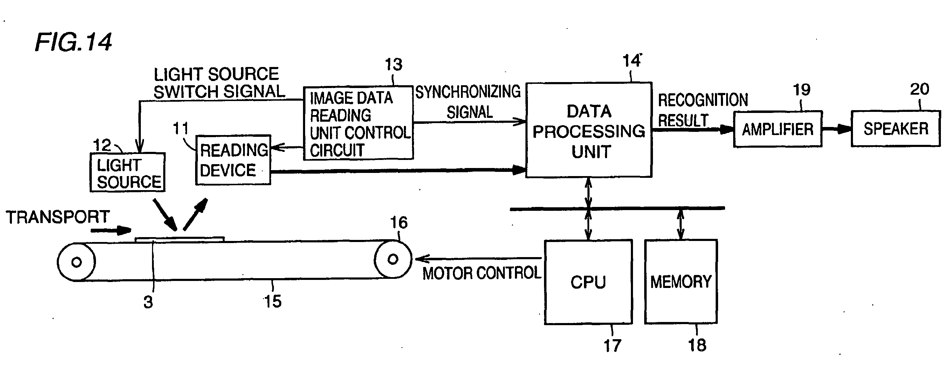

Fig. 14 shows an example of a structure of a reading apparatus for reading card 3 on which two-dimensional code 21 is printed. Card 3 is placed on a belt 15 so that the upward-facing surface of card 3 has two-dimensional code 21 printed thereon. A motor 16 drives belt 15 to transport (move) card 3 from left to right as seen from Fig. 14.

A light source 12 generates light according to a light source control signal supplied from an image data reading unit control circuit 13 to radiate card 3 with the generated light. A reading device 11 constituted of a CCD imaging unit for example is controlled by image data reading unit control circuit 13 to image the surface of card 3 on which two-dimensional code 21 is printed and thus output, to data processing unit 14, a resultant image signal obtained through the imaging.

To data processing unit 14, a synchronizing signal synchronized with an image reading operation is further supplied from image data reading unit control circuit 13. Synchronously with the synchronizing signal supplied from image data reading unit control circuit 13, data processing unit 14 binarizes and recognizes the image signal supplied from reading device 11 to generate a binary code in accordance with results of the recognition. Data processing unit 14 further converts the binary code into an analog audio signal to output the converted signal to a speaker 20 via an amplifier 19.

A CPU 17 controls data processing unit 14 and motor 16. Data and program necessary for execution of various processes by CPU 17 are appropriately stored in a memory 18.

An operation of the reading apparatus is described below. When the reading apparatus is commanded by a user to start reading, CPU 17 controls motor 16 to drive belt 15. Card 3 placed on belt 15 is accordingly transported from left to right in Fig. 14.

CPU 17 also controls image data reading unit control circuit 13 to cause light source 12 to generate light to be emitted toward card 3. At this time, reading device 11 is controlled by image data reading unit control circuit 13 to read two-dimensional code 21 printed on card 3. Data processing unit 14 binarizes an image signal supplied from reading device 11, converts the binary signal into binary data and then converts the binary data into an analog audio signal. The analog audio signal is output to speaker 20 via amplifier 19.

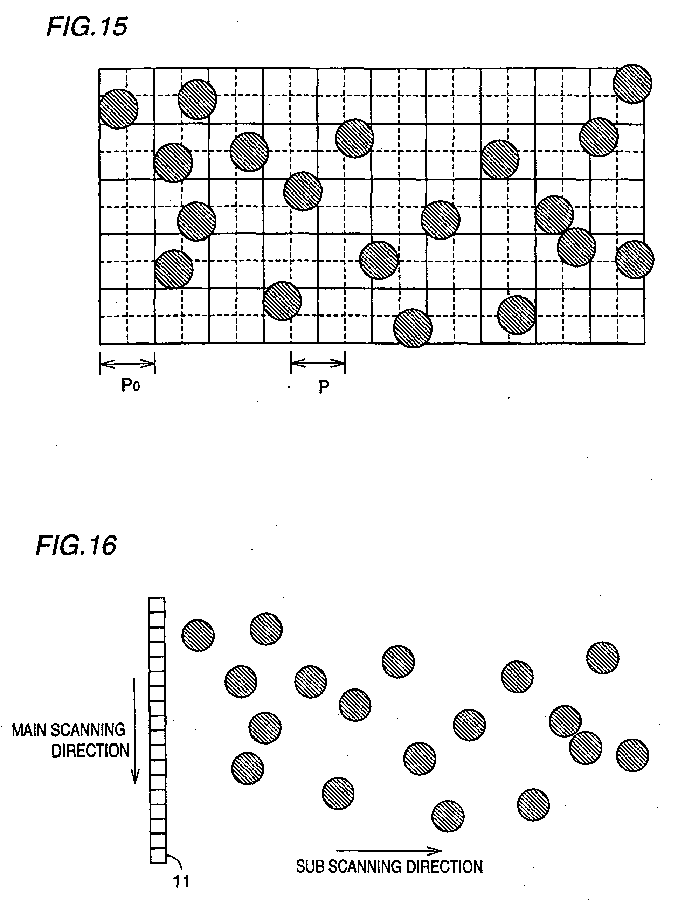

The two-dimensional code printed on card 3 is described below with reference to Fig. 15. Printing unit 2 for printing of card 3 has the highest resolution corresponding to a pitch of value P0. Accordingly, pixels (dots) each have a diameter equal to or somewhat greater than value P0. Although dots are not perfect circles in terms of microscopic view, the dots are nearly circular. The diameter of a dot refers to the diameter of a corresponding circle of the dot. The dot diameter is herein defined to be equal to pitch value P0 corresponding to the highest resolution for convenience of description.

Printing unit 2 prints a two-dimensional code on card 3 with print pitch P which is approximately twice as long as the dot diameter as shown in Fig. 15. Consequently, there are few dots adjacent to and overlapping each other even if printed dots are deviated from originally intended positions. Accordingly data can accurately be read.

Referring to Figs. 16 to 18, a principle of reading is described. Fig. 16 shows scanning directions of reading device 11. In Fig. 14, card 3 is moved to the right relative to reading device 11 for reading of the two-dimensional code. In Fig. 16, the two-dimensional code is shown to be read by moving reading device 11 to the right (in sub scanning direction). The main scanning direction in Fig. 16 is accordingly the downward direction along reading device 11.

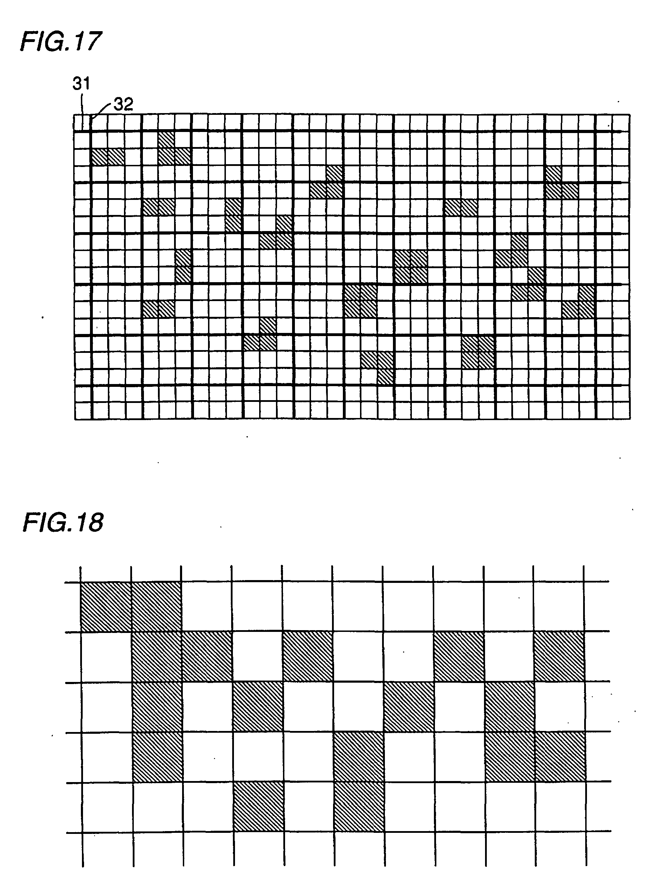

Reading device 11 thus scans the code in the main and sub scanning directions and accordingly data processing unit 14 can obtain a resultant reading as shown in Fig. 17. In Fig. 17, a blackened cell indicates that a dot is detected while a white cell indicates that no dot is detected. Here, the dimension of a cell in the vertical direction is defined by a pixel of the CCD imaging unit constituting reading device 11 and the dimension of the cell in the horizontal direction is defined by a speed per unit time in the sub scanning direction.

On the supposition that one dot on card 3 corresponds to 3 × 3 cells, data processing unit 14 determines, when two or more cells among 3 × 3 cells are blackened cells, that a dot is located at the 3 × 3 cells. This determination provides a result as shown in Fig. 18. One rectangle in Fig. 18 corresponds to a region formed of 3 × 3 cells in Fig. 15. A blackened region in Fig. 18 is a region where a dot is located as determined. In other words, the blackened regions in Fig. 18 correspond to black dots in Fig. 16.

When it is supposed as shown in Fig. 17 that one dot corresponds to a region of 3 × 3 cells, determination as to whether or not a dot is present in each region differs depending on where a horizontal grid 31 and a vertical grid 32 that define 3 × 3 cells are positioned. Then, as shown in Fig. 13, a row of the two-dimensional code on at least one end thereof among rows in the sub scanning direction is defined as a reference row 41, and a column of the two-dimensional code on at least one end thereof among columns in the main scanning direction is defined as a reference column 42 (from which reading is started). In reference row 41 and reference column 42, dots are printed on all regions with a print pitch equal to pitch P0 of the highest resolution of printing unit 2.

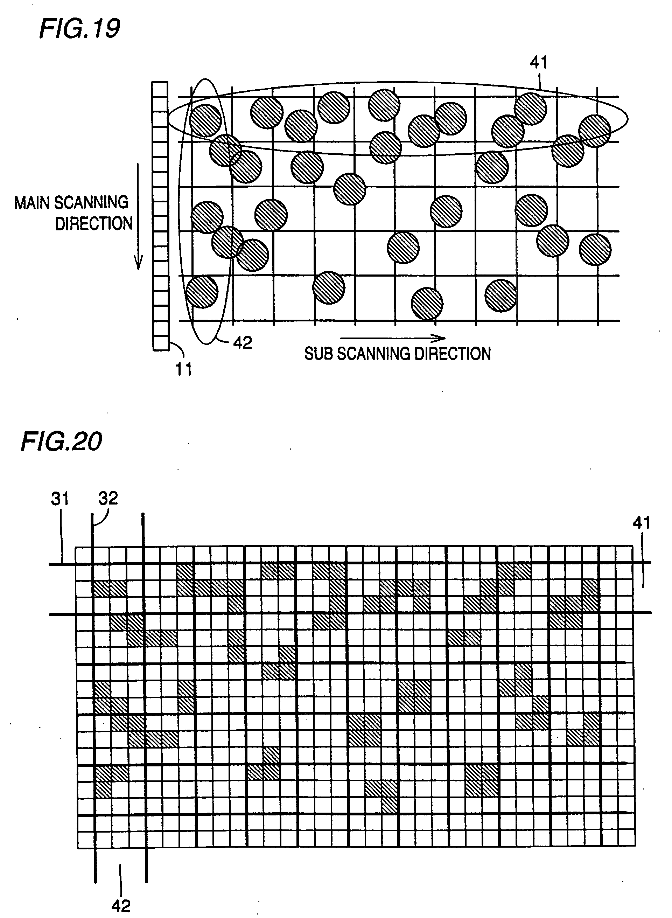

Consequently, when the two-dimensional code printed as shown in Fig. 19 is read by reading device 11, a resultant reading is the one as shown in Fig. 20. Dots must be printed with pitch P0 in reference row 41. Then, the number of cells regarded as black cells in each row of cells (horizontally aligned cells) as a result of reading is counted to produce a histogram. The number of black cells in three rows belonging to reference row 41 is indicated by a histogram value that is considerably greater than the corresponding value regarding the number of black cells in rows of regions except for reference row 41. Accordingly, three rows of cells having black cells greater in number than a predetermined threshold can be detected as reference row 41.

Similarly, with regard to the main scanning direction, the number of black cells in each column of cells (vertically aligned cells) is counted to produce a histogram. Then, a histogram value for cells in three columns belonging to reference column 42 is greater than histogram values for cells in other columns. Accordingly, three columns having black cells greater in number than a predetermined threshold can be detected as columns of cells belonging to reference column 42.

Reference row 41 and reference column 42 are thus detected and thereafter grids 31 or grids 32 are arranged at every three rows or columns. Then, grids 31 and 32 corresponding to read pixels can be arranged.

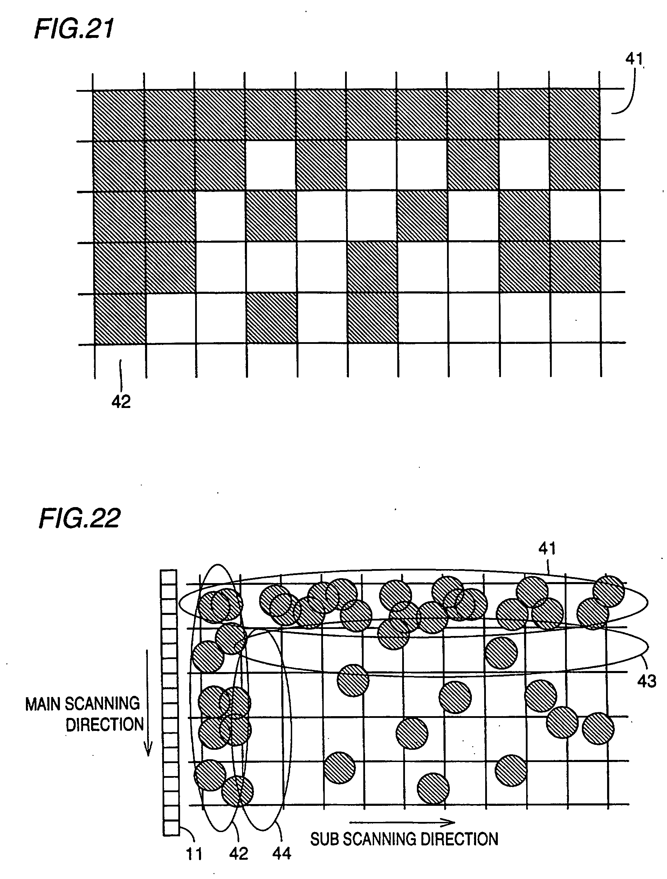

Referring to Fig. 21, grids 31 and 32 are thus arranged and on the basis of which presence/absence of dots is determined to represent presence and absence of dots as black and white regions respectively. Regions corresponding to reference row 41 and reference column 42 are all black regions.

Fig. 22 shows a structure of the two-dimensional code (dot code) having more accurately arranged grids 31 and 32 as an example. Specifically, in this exemplary structure, a reference row 43 is arranged inside a reference row 41 and a reference column 44 is arranged inside a reference column 42. No dot is arranged in reference row 43 and reference column 44. In other words, reference row 43 and reference column 44 are blank row and column respectively.

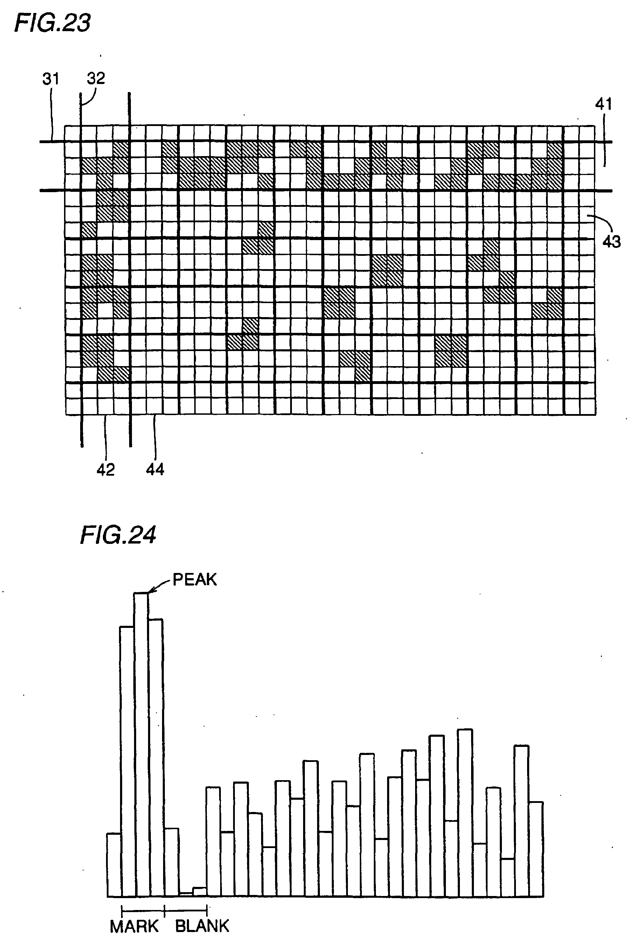

Fig. 23 shows a resultant reading of the dot code shown in Fig. 22 by reading device 11. As shown in Fig. 23, each region of 3 × 3 cells in reference row 43 inside reference row 41 and in reference column 44 inside reference column 42 includes one or no black cell.

The number of black cells in each column of cells shown in Fig. 23 is counted to represent the resultant numbers by means of a histogram as shown in Fig. 24. Referring to Fig. 24, the number of black cells in a column of cells adjacent to reference column 42 is extremely smaller than that of black cells in the column of cells belonging to reference column 42. Then, the difference in number of black cells between columns adjacent to each other can be compared with a predetermined threshold to accurately detect reference column 42. In a similar manner, reference row 41 can more accurately be detected than that as shown by the example in Fig. 19.

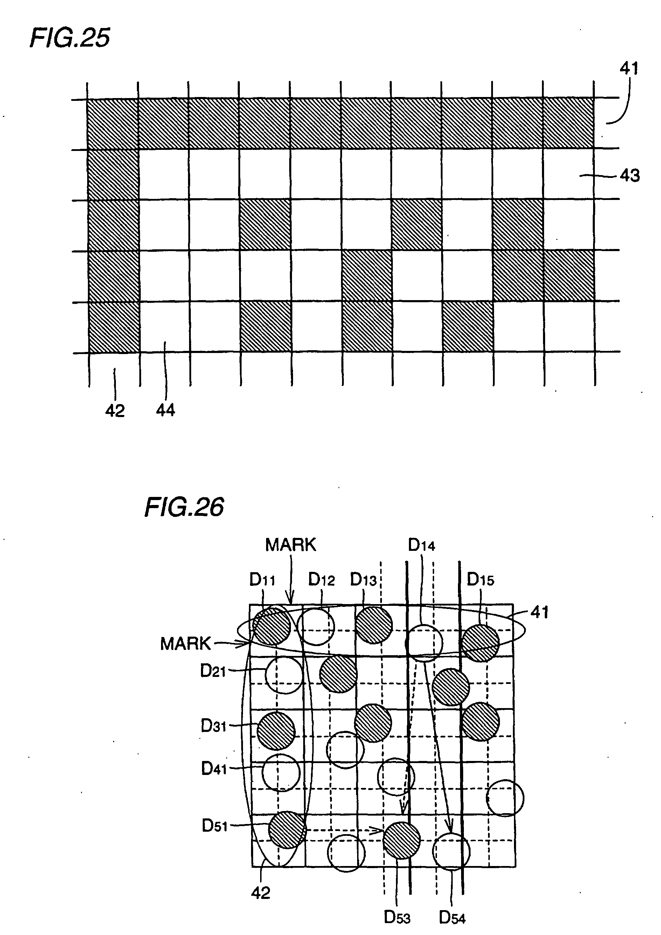

Fig. 25 shows a result of recognition by detecting reference rows 41 and 42 and reference columns 42 and 44 and arranging grids 31 and 32 to recognize presence/absence of dots.

Fig. 26 shows another example of the two-dimensional code. This example has dots each printed in a color determined in advance depending on the position to allow the dots in different colors to alternately be arranged. This example also has a reference row 41 and a reference column 42. In reference row 41, a dot D11 in a first color, a dot D12 in a second color, a dot D13 in the first color, a dot D14 in the second color, and a dot D 15 in the first color are alternately arranged in terms of color. Similarly, in reference column 42, the dot D11 in the first color, a dot D21 in the second color, a dot D31 in the first color, a dot D41 in the second color, and a dot D51 in the first color are alternately arranged in terms of color. In the remaining region except for reference row 41 and reference column 42, dots in the first or second color are arranged as required according to data. The color of a dot is determined in advance depending on the position of the dot.

Since the color of a dot is preliminarily determined according to the position of the dot, it is possible to decide the position of a printed dot from the color of the dot even if the printed dot is deviated from the originally intended position.

As shown in Fig. 26 for example, when presence/absence of dots in the column including dot D14 in the second color is detected successively in the downward direction, both of dot D54 in the second color and dot D53 in the first color are detected. Any dot in this column belonging to the same row as that of dot D51 must be the same in color as D14 having the second color. Then, it is seen that dot D54 in the second color is the originally intended dot while dot D53 in the first color should be in the adjacent region.

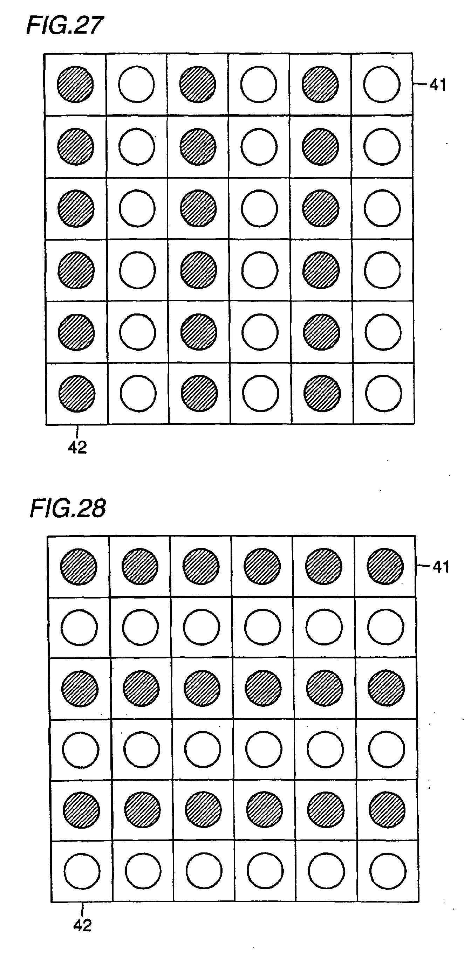

The example of Fig. 26 has dots of different colors printed in the pattern of a houndstooth check. Alternatively, the color of printed dots may be determined such that each column has its specific color as shown in Fig. 27 or each row has its specific color as shown in Fig. 28.

An erroneous detection can thus be prevented.

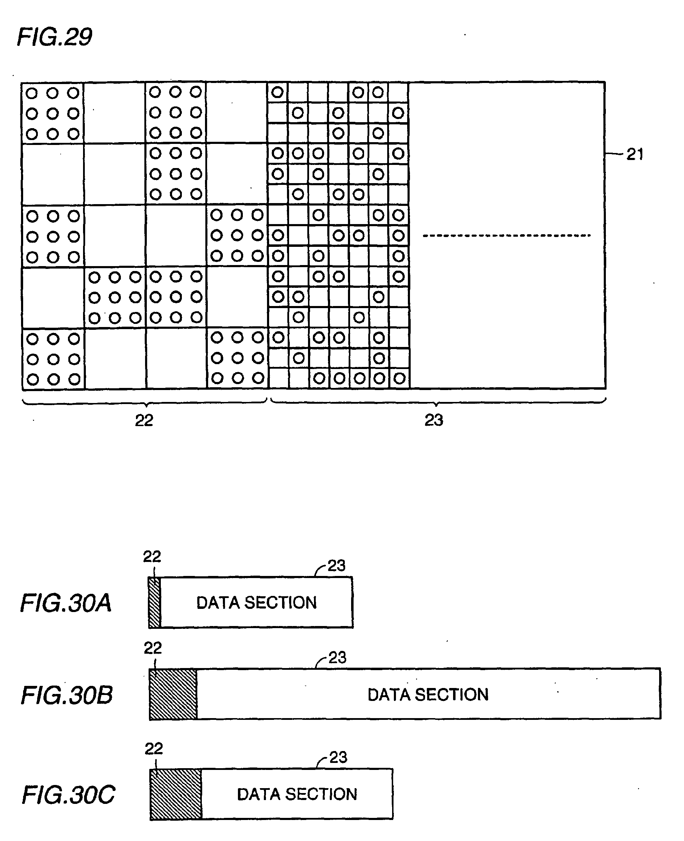

Fig. 29 shows still another example of the two-dimensional code. According to this example, dot pitch for a header section 22 and that for a data section 23 are set differently from each other. Specifically, the dot pitch for header section 22 is set substantially greater than that for data section 23. In the example of Fig. 29, a region of header section 22 corresponding to a 3×3-dot region of data section 23 has substantially one dot arranged therein. (3 × 3 dots in header section 22 are defined to be one dot.) Then, the print pitch of header section 22 is six times as large as that of data section 23. Consequently, reading for header section 22 can more accurately be done than that for data section 23 to prevent the code from being erroneously detected.

Data recorded on data section 23 is audio data for example. Even if the data on data section 23 is erroneously detected, the influence thereof is small. Dots are accordingly arranged in data section 23 at a relatively higher density.

It is desired that no error occurs for header section 22 since header section 22 usually has important information arranged therein. However, upon occurrence of any error, the error must be corrected. Then, as shown in Figs. 30A to 30C, it could be possible to add error correction codes to header section 22 and data section 23 to print the two-dimensional code. When the same error correction codes having a high error correction capability are added to header section 22 and data section 23 respectively to ensure correction of any error for header section 22, the total code amount as shown in Fig. 30B is considerably greater than that of the two-dimensional code shown in Fig. 30A having no error correction code added thereto.

Then, as shown in Fig. 30C, it would be possible to add an error correction code having a sufficient error correction capability to header section 22 and add an error correction code having a relatively lower error correction capability as compared with that for header section 22 to data section 23. Accordingly, the code amount of header section 22 is the same as that shown in Fig. 30B while the code amount of data section 23 can be made smaller than that shown in Fig. 30B. If data section 23 has audio data arranged therein, occurrence of any error exerts little influence. In such a case, the error correction code of data section 23 may have a relatively lower error correction capability than that of header section 22. The principle shown in Figs. 30A to 30C is applicable not only to dot code but also to barcode and other codes.

### (2) Second Embodiment

A second embodiment of the present invention is now described. According to the second embodiment, a printing apparatus for printing data on a card and a reading apparatus for reading a card 3 on which a two-dimensional code is printed and a card 3 on which a two-dimensional code 21 is printed have the same structures as those of the first embodiment.

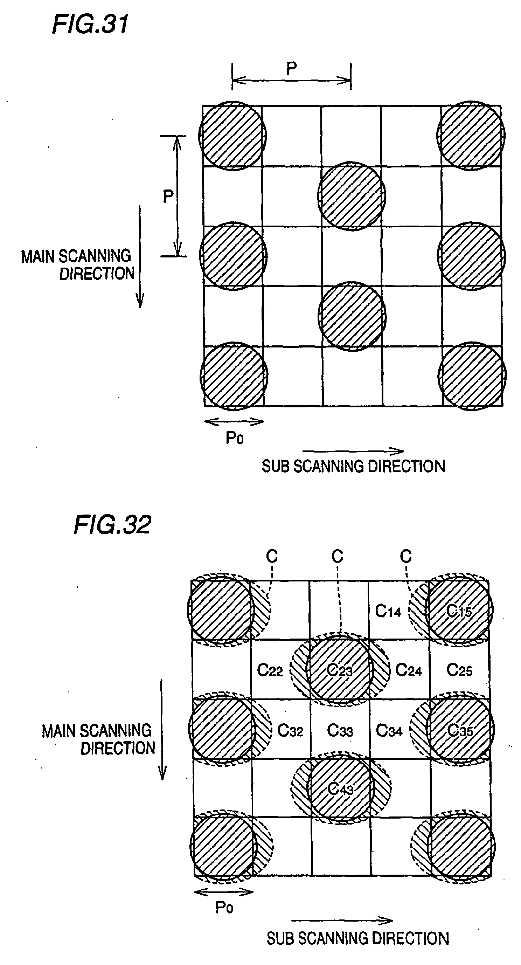

Referring to Fig. 31, a two-dimensional code printed on a card 3 according to the second embodiment is described.

A printing unit 2 of the second embodiment is the same as that of the first embodiment in that the two-dimensional code is printed on card 3 with print pitch P approximately twice as large as the dot diameter in both of the main and sub scanning directions as shown in Fig. 31. According to the second embodiment, when dots are observed in the direction of each column, an adjacent dot on the right or left of any observed dot is shifted in the column direction by pitch value P0 corresponding to the highest resolution.

Accordingly, as shown in Fig. 32, even if perimeter C of the area where a dot could be printed protrudes from a cell of P0 ×P0 in size into adjacent cells, it is less possible that any cell into which dots in adjacent cells protrude is erroneously determined as a cell having a dot. This is because no dot is arranged in cells at least horizontally and vertically adjacent to the cell having the dot arranged therein.

For example, in Fig. 32, no dot is present in cells C14 and C34 vertically adjacent to cell C24 and in cell C25 on the right of and adjacent to cell C24. Then, protrusion of a dot into cell C24 is chiefly from adjacent cell C23 on the left.

The dot of cell C23 protrudes to a greater extent in the sub scanning direction (horizontal direction in Fig. 32) than that in the main scanning direction (vertical direction in Fig. 32). With respect to cell C24, two cells C23 and C25 are adjacent to cell 24 in the sub scanning cells. One of the two adjacent cells, C25 has no dot arranged therein. Dot protrusion into cell 24 is thus not so considerable.

With respect to cell C33, respective dots in two cells C23 and C43 adjacent to cell C33 in the main scanning direction protrude into cell C33. However, the dots protrude to less extent in the main scanning direction than that in the sub scanning direction. Accordingly, respective dots in the cells adjacent to cell C33 protrude to a relatively small extent.

When dots are arranged as shown in Fig. 32, it is less likely that a cell without dot is erroneously determined as a cell where a dot is present.

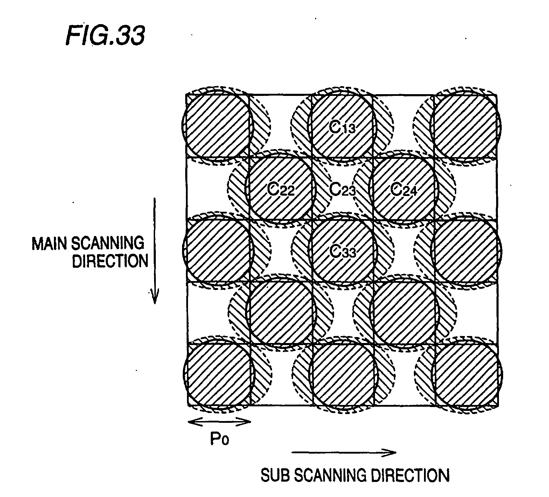

Fig. 33 shows an arrangement of dots presented for comparison with the dot arrangement shown in Fig. 32. In the arrangement shown in Fig. 33, dots in each column are displaced by pitch P0 while the print pitch is P0 for both of the main and sub scanning direction. In other words, the dots are arranged in the pattern of a houndstooth check. When the dots are thus arranged, dots in cells C22 and C24 adjacent to cell C23 in the sub scanning direction protrude into cell C23 for example. As a result, it could erroneously be determined that cell C23 has a dot. This arrangement is therefore not preferable.

### (3) Third Embodiment

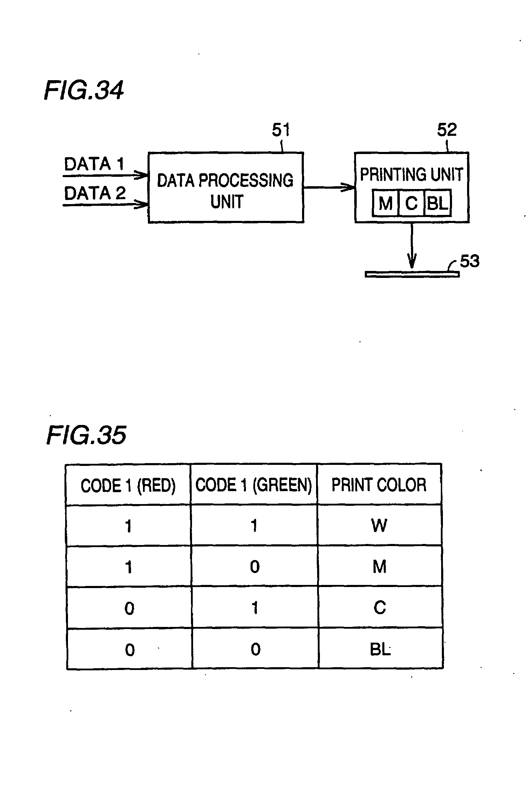

A third embodiment of the present invention is described below. Fig. 34 shows an example of a structure of a printing apparatus (printer) according to the third embodiment of the invention. This printing apparatus is basically the same as the printing apparatus of the first embodiment. According to the third embodiment, to a data processing unit 51, two types of data to be printed on a card 53 (e.g. data 1 corresponding to a code to be read by means of red radiation and data 2 corresponding to a code to be read by means of green radiation) are input. Data processing unit 51 combines the input data in a plurality of types to generate color patterns corresponding to respective combinations. Data regarding the generated color patterns is supplied to a printing unit 52. Printing unit 52 prints, on card 53, a pattern code formed of a color element corresponding to input data. In this case, a pattern code of a color element, cyan (C), white (W), black (BL), or magenta (M) is printed. White used here is the color of a sheet of paper (card) itself.

Fig. 35 shows a principle on which colors are determined by data processing unit 51. As shown in Fig. 35, code 1 corresponding to data 1 can be read by red radiation and code 2 corresponding to data 2 can be read by green radiation. When both of code 1 and code 2 are "1", a color element to be printed is white (W). When code 1 is "1" and code 2 is "0", a color element to be printed is magenta (M). When code 1 is "0" and code 2 is "1", a color element to be printed is cyan (C). When both of code 1 and code 2 are "0", a color element to be printed is black (BL).

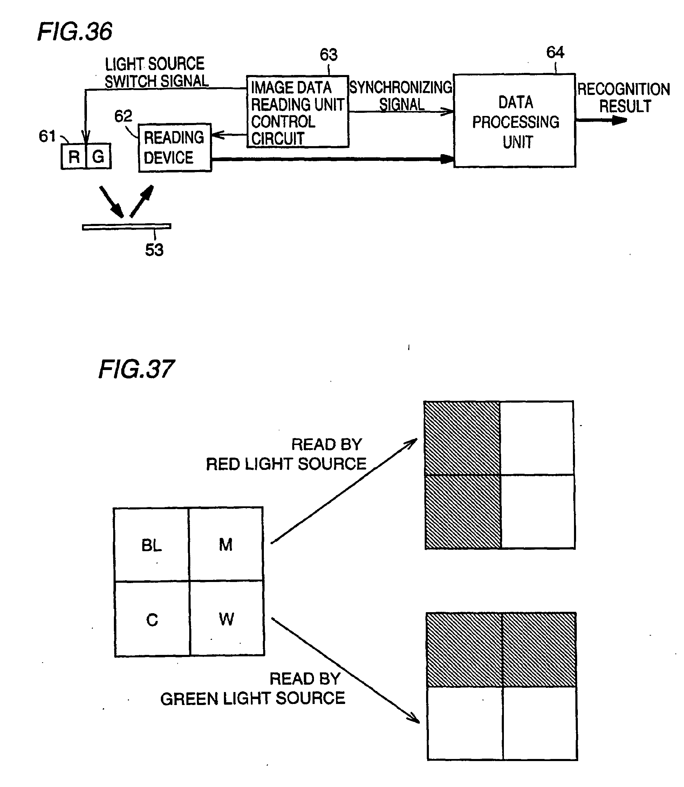

Fig. 36 shows an example of a structure of a reading apparatus for reading card 53 on which a color pattern code is printed as described above. A light source 61 generates light in red (R) or green (G) according to a light source switch signal supplied from an image data reading unit control circuit 63 to emit the generated light onto the surface of card 53 with the color pattern code printed thereon.

A reading device 62 constituted of a CCD imaging unit for example images the color pattern code on card 53 to output a resultant image signal to a data processing unit 64. To data processing unit 64, a synchronizing signal synchronized with a reading operation is supplied from image data reading unit control circuit 63. Data processing unit 64 binarizes the image signal supplied from reading device 62 to make determination regarding the pattern.

An operation is described below. When the reading apparatus is commanded by a user to start reading, light source 61 is controlled by image data reading unit control circuit 63 to generate radiation in red at first. Reading device 62 images a pattern code on card 53 irradiated with the red radiation and outputs a resultant image signal to data processing unit 64.

Then, after the reading with red radiation is completed, light source 61 is controlled by image data reading unit control circuit 63 to generate radiation in green. Reading device 62 images the pattern code on card 53 irradiated with the green radiation and outputs a resultant image signal to data processing unit 64.

As shown in Fig. 37, a black pattern read by irradiating the color pattern code with red radiation is directly read as black while a cyan pattern, which is the complementary color of red, that is read with red radiation is also read as a black pattern. Similarly, when the color pattern code is read by irradiating the code with green radiation, the black pattern is directly read as black while a magenta pattern which is the complementary color of green is also read as a black pattern.

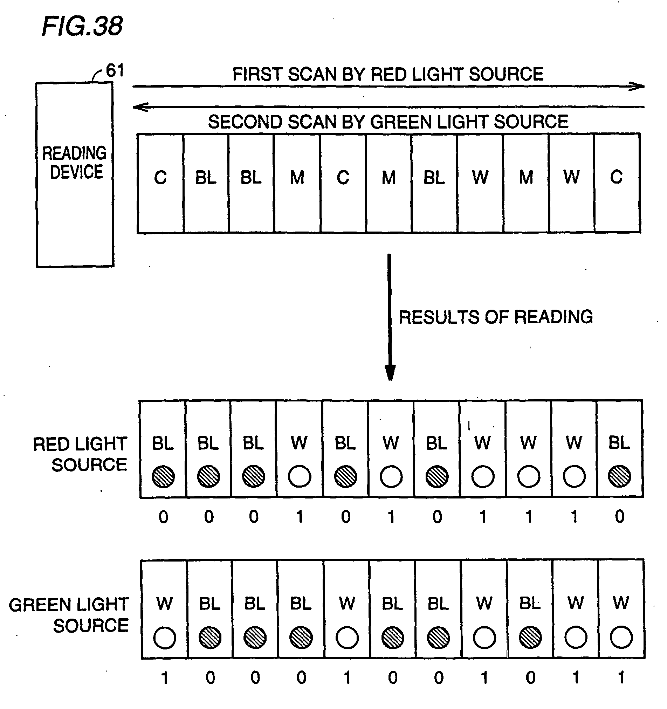

Then, as shown in Fig. 38, when card 53 is printed with a color pattern code consisting of elements: cyan, black, black, magenta, cyan, magenta, black, white, magenta, white, cyan, data processing unit 64 recognizes the pattern read with red radiation as a code of elements: black, black, black, white, black, white, black, white, white, white, black and recognizes the pattern read with green radiation as a code of elements: white, black, black, black, white, black, black, white, black, white, white. When black and white are correlated respectively with "0" and "1", the read pattern is "00010101110" or "10001001011". Namely, the former is data of code 1 while the latter is data of code 2.

In this way, one pattern code can be correlated with two types of codes. One of the two codes is defined as an original code and the other is defined as a secret code. Then, copy of the pattern code can be prevented.

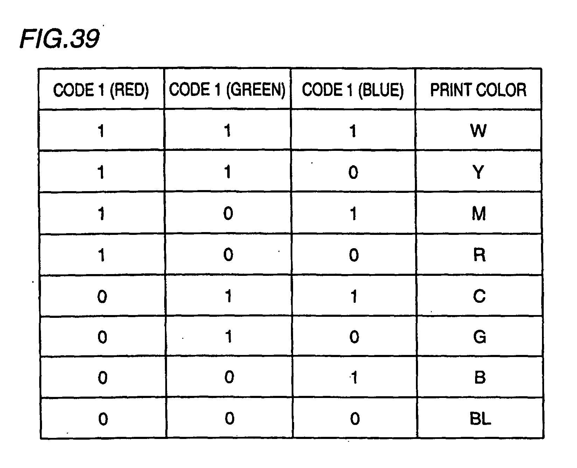

In addition to red and green radiation as light source, blue radiation can be employed to print one color code by combination of three types of data as shown by an example in Fig. 39.

In the example shown in Fig. 39, code 1 can be read with red radiation, code 2 can be read with green radiation and code 3 can be read with blue radiation. When code 1, code 2 and code 3 are all "1", an element is printed in white. When code 1 and code 2 are "1" and code 3 is "0", an element is printed in yellow (Y). When code 1 is "1", code 2 is "0" and code 3 is "1", an element is printed in magenta (M). When code 1 is "1" and code 2 and code 3 are "0", an element is printed in red (R).

When code 1 is "0" and code 2 and code 3 are "1", an element is printed in cyan (C). When code 1 is "0", code 2 is "1" and code 3 is "0", an element is printed in green (G). When code 1 and 2 are "0" and code 3 is "1", an element is printed in blue (B). When code 1, code 2 and code 3 are all "0", an element is printed in black (BL).

Yellow is the complementary color of blue. Then, when a color pattern code is read by irradiating the code with blue radiation, a black pattern is read directly as black while a pattern of yellow which is the complementary color of black is also read as a black pattern. In this case, three types of information can be read from one color pattern code to which the information is allocated.

The present invention is applicable to pattern codes such as barcode, dot code and various types of two-dimensional codes.

## Claims

1. A dot code constituted of a plurality of dots, wherein said dots are arranged on the basis of a pitch approximately twice as large as a diameter of a dot.

2. A dot code constituted of a plurality of dots, wherein said dots are arranged with a minimum pitch in a region on a reference line and arranged with a pitch longer than the minimum pitch in a remaining region except for the region on the reference line.

3. A dot code constituted of a plurality of dots, wherein
said dots are arranged at respective positions in a region on a reference line and arranged at respective positions corresponding to data in a remaining region except for the region on said reference line, and
a region where none of said dots is arranged is formed between said reference line and said remaining region.

4. A dot code constituted of a plurality of dots, wherein said dots are colored in colors corresponding to respective positions where said dots are arranged.

5. A dot code constituted of a plurality of dots, wherein
said dot code includes a header section and a data section, and
said dots have a pitch in said header section set at a greater value than that of a pitch in said data section.

6. A two-dimensional code including a header section and a data section wherein an error correction code for said header section has a higher correction capability than that of an error correction code for said data section.

7. A dot code constituted of a plurality of dots, wherein said dots are arranged in each column with a pitch approximately twice as large as a diameter of a dot, said dots are arranged in a first column and arranged in a second column adjacent to and apart from said first column by said pitch approximately twice as large as the diameter of a dot, said dots arranged in said second column each being displaced in the direction of said column by almost said diameter of a dot from a position of the dot arranged in said first column.

8. A pattern code constituted of a plurality of elements in predetermined colors, wherein
said colors of the elements are determined to allow said pattern code read with light in a first color to provide a first code and allow said pattern code read with light in a second color to provide a second code.

9. A printing apparatus for printing a pattern code constituted of a plurality of elements in predetermined colors on a medium, comprising:
capture means for capturing a plurality of data;
determination means for determining the predetermined colors by combining the plurality of data captured by said capture means; and
print means for printing said pattern code of said elements in the colors determined by said determination means on said medium.

10. A reading apparatus for reading a pattern code constituted of a plurality of elements in predetermined colors from a medium on which said pattern code is printed, comprising:
generation means for generating light in a plurality of colors;
control means for controlling said generation means to generate light in a predetermined color among the plurality of colors; and
reading means for reading a first code from said pattern code on said medium when light in a first color is generated by said generation means and reading a second code from said pattern code on said medium when light in a second color is generated by said generation means.
